# EUROPÄISCHE PATENTANMELDUNG

(11) **EP 4 585 540 A1**
(43) Veröffentlichungstag der Anmeldung: **16.07.2025**
(21) Anmeldenummer: 24176064.4
(22) Anmeldetag: 15.05.2024
(51) Int. Cl.: B65G 43/00, B65G 47/96

(54) **VERFAHREN ZUR BESTIMMUNG DER GEOMETRIE VON WAGEN EINER SORTIERANLAGE UND VERFAHREN ZUR SCHADENSERKENNUNG UND/ODER -VORHERSAGE AN DEN WAGEN EINER SORTIERANLAGE**

(30) Priorität: 11.01.2024 EP 24151472
(71) Anmelder: Substring AG, 3048 Worblaufen (CH)
(72) Erfinder: Tesch, Marc, 3048 Worblaufen (CH); Zbinden, Joël, 3048 Worblaufen (CH)
(74) Vertreter: Dittmann, Rolf

(57) **Zusammenfassung**

Vorgeschlagen ist ein Verfahren zur Bestimmung der Geometrie von Wagen (10, 10a) einer Sortieranlage (1). Jeder Wagen umfasst ein Fahrwerk, mit dem er in einer Führungsbahn (15) geführt ist. Jeder Wagen umfasst weiterhin eine Kippschale (111) sowie einen Kipphebel (106, 116), wobei der Kipphebel um eine Lagerstelle (107) drehbar und relativ zum Fahrwerk ortsfest gelagert ist sowie beabstandet von der Lagerstelle mit der Kippschale funktionell zum Kippen der Kippschale gekoppelt ist, derart, dass eine Drehbewegung des Kipphebels um die Lagerstelle in einer Kippbewegung der Kippschale resultiert. Die miteinander gekoppelten Wagen werden entlang der Führungsbahn umlaufend geführt. An einem zur Führungsbahn feststehenden Messpunkt (151) wird wenigstens eine optische Aufnahme wenigstens eines Bereichs eines Wagens (10, 10a) generiert. In der wenigstens einen optischen Aufnahme des wenigstens eines Bereichs des Wagens wird wenigstens ein charakteristisches Geometriemerkmal (201, 202, 203, 204, 205, 206, 221, 222, 223, 224, 231, 232) des Wagens identifiziert und dessen Position (a, b) entlang wenigstens einer Achse (x, y, z) und/oder dessen Orientierung relativ zu einem zweiten charakteristischen Geometriemerkmal und/oder in einem Koordinatensystem der optischen Aufnahme in wenigstens einer Ebene wird bestimmt.

## Beschreibung

### TECHNISCHES GEBIET

Die vorliegende Beschreibung betrifft ein Verfahren zur Bestimmung der Geometrie von Wagen einer Sortieranlage, sowie ein Verfahren zur Schadenserkennung und/oder -vorhersage an den Wagen einer Sortieranlage unter Verwendung des vorgenannten Verfahrens der in den Ansprüchen gekennzeichneten Art.

### TECHNOLOGISCHER HINTERGRUND

Automatisierte Sortieranlagen für Pakete und Briefe finden beispielsweise in Logistikzentren weltweit Anwendung. Die Aufgabe der Sortieranlagen ist es, einen Strom von Gegenständen nach Kriterien, die bestimmte Eigenschaften jedes einzelnen der Gegenstände betreffen, zu einem durch diese bestimmten Eigenschaften bestimmten Zielort zu transportieren und zu platzieren. Beispielsweise können Waren- oder Briefsendungen nach ihrem Bestimmungsort oder nach der Zugehörigkeit des Bestimmungsorts zu einem bestimmten Zielgebiet unterschieden werden. Dabei wird jede der Sendungen an einem Zielort abgelegt, der dem Bestimmungsort oder einem Zielgebiet, das den Bestimmungsort umfasst. Von dort kann die abgelegte Sendung beispielsweise in einen dort bereitgestellten Behälter oder auf eine weitere Fördereinrichtung für den Weitertransport der jeweiligen Sendungen bereitgestellt sein.

Eine Sortieranlage umfasst beispielsweise eine Anzahl von Wagen, die auf einer, insbesondere umlaufenden, Führungsbahn angeordnet sind und sich auf der Führungsbahn geführt bewegen können. Typischerweise sind die Wagen zu einem Zug gekoppelt und bilden eine Umlauf-Transportbahn. Insbesondere kann vorgesehen sein, dass die Wagen umlaufend gekoppelt sind und dergestalt einen umlaufenden Endloszug bilden.

Typischerweise umfassen die Wagen Kippschalen, die auf einem Fahrwerk kippbar angeordnet sind. Die Kippschale wird in einer Lage, in der sie Sendungen ähnlich einem Tisch zu tragen in der Lage ist, mit einer Sendung beladen. Die Wagen bewegen sich umlaufend auf der Führungsbahn. Wenn nun ein bestimmter Wagen einen Zielort erreicht, an dem die Sendung platziert werden soll, wird die Schale durch geeignete Mittel gekippt, so, dass die Sendung von der Kippschale und damit von der Umlauf-Transportbahn rutscht. Prinzipiell kann die Kippung in zwei Richtungen, zum Beispiel in Fahrtrichtung nach links oder nach rechts, erfolgen, so, dass an jeder Position entlang der Führungsbahn zwei Zielorte auf unterschiedlichen Seiten der Führungsbahn, definiert sind.

Die Anwendung von Kippschalensortierern, und im Zusammenhang damit dem unten vorgeschlagenen Gegenstand, ist selbstverständlich nicht auf das Sortieren von Briefen und Paketen eingeschränkt, sondern kann grundsätzlich in vielen Anwendungen genutzt werden, insbesondere, wo einzelne Positionen von Stückgutströmen vereinzelt und nach Kriterien jeglicher Art sortiert werden sollen.

Zu nennen wäre als ein weiteres nicht einschränkendes Beispiel das Sortieren von Koffern in Flughäfen.

Aufgrund des geforderten Durchsatzes einer solchen Sortieranlage bewegen sich die Wagen auf der Führungsbahn in einem Tempo, das ein hohes Tempo beim Beladen der Wagen als auch beim Kippen und anschliessenden Rückstellen der Kippschalen erfordert. Dies wiederum führt während des Betriebs zu hohen Beschleunigungen der einzelnen Komponenten, was schliesslich in transienten mechanischen Wechselbelastungen der Komponenten der Wagen resultiert. Zusätzlich können schlecht liegende, sehr schwere oder sogar eingeklemmte Pakete die Komponenten der Wagen stark belasten. Daneben laufen derartige Sortieranlagen über lange ununterbrochene Betriebszeiten, häufig auch im 24-Stunden-Betrieb und/oder and sieben Tagen in der Woche. Durch Ermüdung der Komponenten kommt es über die Zeit zu Verformungen, Rissen und Brüchen, welche die Betriebssicherheit der Sortieranlage gefährden.

Schäden an Wagen können leicht in ungeplanten Anlagenstillständen resultieren, welche die Effizienz der Sortieranlage verschlechtern und zu Verzögerungen bei der Verarbeitung der Sendungen führen. Typische Stillstandzeiten würden in bestimmten Sortieranlagen in einer Grössenordnung von 70 Minuten liegen. Weiterhin muss für die Intervention im Falle eines schadensbedingten Anlagenstillstands unter Umständen auch nachts und am Wochenende und über Feiertage qualifiziertes Personal vorgehalten werden. Regelmässige Inspektionen sind im Gegenzug auch keine zufriedenstellende Lösung, da solche Sortieranlagen oft mehrere 100 Wagen und mehr umfassen, die alle einzeln geprüft werden müssen, wobei die Schäden, insbesondere Verbiegungen und Verformungen, häufig relative klein dimensioniert und daher von blossem Auge kaum erkennbar sind.

Es besteht der Wunsch, die Wagen einer Sortieranlage im laufenden Betrieb zu überwachen, Veränderungen der Geometrie, die zu einem Schaden führen können oder bereits einen Schaden darstellen, zu erkennen und zu bewerten, und eine geplante und gezielte Schadenbehebung genau an den Wagen vorzunehmen, bei denen Veränderungen der Geometrie erkannt werden, die als kritisch für den Betrieb der Sortieranlage eingestuft werden.

### DARSTELLUNG DES GEGENSTANDES DER VORLIEGENDEN BESCHREIBUNG

Es soll ein Verfahren zur Bestimmung der Geometrie von Wagen einer Sortieranlage sowie ein Verfahren zur Schadenserkennung und/oder -vorhersage an den Wagen einer Sortieranlage der eingangs genannten Art angegeben werden. Gemäss Aspekten des beschriebenen Gegenstands sollen bestimmte oben genannte Nachteile des Standes der Technik vermieden oder zumindest abgemildert werden. Gemäss anderer Aspekte sollen Verfahren der eingangs genannten Art angegeben werden, die es erlauben, die Wagen einer Sortieranlage im laufenden Betrieb zu überwachen, Abweichungen und/oder Veränderungen der Geometrie, die zu einem Schaden führen können oder bereits einen Schaden darstellen, zu erkennen und zu bewerten, und eine geplante und gezielte Schadenbehebung genau an den Wagen vorzunehmen, bei denen Veränderungen der Geometrie erkannt werden, die als kritisch für den Betrieb der Sortieranlage eingestuft werden.

Die vorliegend beanspruchte Erfindung ist in den Patentansprüchen beschrieben.

Weitere Wirkungen und Vorteile der hier beschriebenen Gegenstände, ob explizit angegeben oder nicht, ergeben sich im Lichte der vorliegenden Beschreibung.

Ein Verfahren der vorliegend beschriebenen Art ist im Anspruch 1 angegeben. Offenbart ist demnach ein Verfahren zur Bestimmung der Geometrie von Wagen einer Sortieranlage, wobei die Sortieranlage eine umlaufende Führungsbahn und eine Anzahl Wagen umfasst. Jeder Wagen umfasst ein Fahrwerk (mit mindestens zwei Rädern), mit dem er in der Führungsbahn geführt ist. Insbesondere umfasst ein Fahrwerk zwei Räder bzw. mindestens zwei Räder. Die Wagen, d.h. die Wagen der Anzahl Wagen, sind miteinander gekoppelt, derart, dass sie einen Zug bilden. Jeder Wagen umfasst weiterhin eine Kippschale sowie einen Kipphebel. Der Kipphebel ist um eine Lagerstelle drehbar und relativ zum Fahrwerk ortsfest gelagert. Weiterhin ist der Kipphebel beabstandet von der Lagerstelle mit der Kippschale funktionell zum Kippen der Kippschale gekoppelt, derart, dass eine Drehbewegung des Kipphebels um die Lagerstelle in einer Kippbewegung der Kippschale resultiert. In bestimmten Ausführungsformen weist der Kipphebel einen Anlaufpunkt auf, der vorgesehen ist, um mit einer relativ zur Führungsbahn ortsfest angeordneten, aber verstellbaren, Betätigungskulisse zusammenzuwirken und dergestalt den Kipphebel um die Lagerstelle zu drehen und dergestalt die Kippbewegung der Kippschale auszulösen. Der Ausdruck «Kippbewegung» ist in diesem Zusammenhang breit zu verstehen und bezeichnet sowohl ein Kippen der Kippschale aus einer waagerechten Position bzw. einer Position, in der ein Gegenstand oder Gegenstände stabil auf der Kippschale gehalten sind in eine Position, in der ein Gegenstand oder Gegenstände von der Kippschale rutschen oder fallen, als auch die entgegengesetzte Bewegung. In spezifischen Ausführungsformen ist der Anlaufpunkt durch eine Kipphebelrolle gebildet, die am Kipphebel drehbar gelagert ist. Die gekoppelten Wagen werden entlang der Führungsbahn umlaufend vorwärtsbewegt. Dabei bewegen sich die Wagen insbesondere in eine Richtung und ohne Fahrtrichtungswechsel entlang der Führungsbahn, weiterhin insbesondere mit einer gleichförmigen Bewegung, d. h. konstanter Geschwindigkeit entlang der Führungsbahn. An einem zur Führungsbahn feststehenden Messpunkt wird wenigstens eine optische Aufnahme wenigstens eines Bereichs eines Wagens generiert. Die optische Aufnahme kann insbesondere eine Bildaufnahme, eine Videoaufnahme und/oder einen Laserscan umfassen, wobei diese Aufzählung keineswegs abschliessend ist oder andere Arten optischer Datenerfassung ausschliesst. Die wenigstens eine optische Aufnahme ist insbesondere derart konfiguriert, dass eine dreidimensionale optische Erfassung des wenigstens eines Bereichs eines Wagens erfolgt. Der Wagen, bei dem die wenigstens eine optische Aufnahme wenigstens eines Bereichs eines Wagens generiert wurde, wird innerhalb des Zuges identifiziert; beispielsweise wird eine Ordnungsnummer zugewiesen. In der wenigstens einen optischen Aufnahme des wenigstens eines Bereichs des Wagens wird wenigstens ein charakteristisches Geometriemerkmal des Wagens identifiziert. Die Position des wenigstens einen charakteristischen Geometriemerkmals entlang wenigstens einer Raumrichtung in einem Koordinatensystem der optischen Aufnahme und/oder relativ zu einem zweiten charakteristischen Geometriemerkmal und/oder die Orientierung des wenigstens einen charakteristisches Geometriemerkmals relativ zu einem zweiten charakteristischen Geometriemerkmal und/oder in einem Koordinatensystem der optischen Aufnahme wird in wenigstens einer Ebene bestimmt. Dabei umfasst das Verfahren selbstverständlich und implizit auch die Identifikation des zweiten charakteristischen Geometriemerkmals. Dergestalt können Geometriemerkmale des Wagens, welche beispielsweise Hinweise auf bestimmte Schadensbilder geben können, vermessen werden. Dabei können die bestimmten Werte selbst und/oder deren Entwicklung über eine Mehrzahl von Vorbeifahrten des Wagens an der Messstelle hinweise darauf geben, ob ein Schaden bzw. ein Zustand, der die Betriebssicherheit der Sortieranlage zu kompromittieren geeignet ist, vorliegt oder innerhalb einer gewissen Zeitspanne zu erwarten ist und es ist ermöglicht, Wartungen gezielt und geplant durchzuführen. Spezifischere Beispiele von Auswerteverfahren sind unten näher ausgeführt.

Insbesondere kann vorgesehen sein, dass wenigstens eine optische Aufnahme wenigstens eines Bereichs jeden Wagens generiert wird.

Ein charakteristisches Geometriemerkmal kann ein reales, also tatsächlich am Wagen vorhandenes, Geometriemerkmal sein, oder ein virtuelles Geometriemerkmal, das in Relation zu einem oder mehreren realen Geometriemerkmalen gebildet wird, beispielsweise eine Bezugslinie, die zwischen zwei charakteristischen Punkten gebildet wird.

Eine Position eines charakteristischen Geometriemerkmals soll dabei Lage in einem innerhalb der optischen Aufnahme oder innerhalb des Raumes definierten oder relativ zum Wagen definierten Koordinatensystem kennzeichnen. Dabei kann die Position auf den Ursprung des Koordinatensystems bezogen sein, oder relativ auf ein anderes charakteristisches Geometriemerkmal. Die Position kann fallweise dreidimensional definiert sein, also durch drei Koordinaten, in anderen Anwendungen aber auch beispielsweise innerhalb einer von zwei Koordinatenachsen aufgespannten Ebene, als Projektion des charakteristischen Geometriemerkmals auf die Ebene, oder entlang bzw. in Richtung einer Achse des Koordinatensystems. Eine Orientierung eines charakteristischen Geometriemerkmals kann beispielsweise ein Winkel sein, den eine charakteristischen Linie mit einer anderen charakteristischen Linie oder einer Koordinatenachse eines innerhalb der optischen Aufnahme oder innerhalb des Raumes definierten oder am Wagen referenzierten Koordinatensystem kennzeichnen. Auch hier kann die Orientierung beispielsweise als absoluter Winkel im Raum bestimmt werden oder in einer Projektion auf eine Ebene. Wichtig ist selbstverständlich, insbesondere auf die unten ausgeführten weitergehenden Verfahren, dass die Definition der Position und/oder Orientierung bei jeder Durchfahrt des Wagens gleich ist, derart, dass die so bestimmten Daten bei jeder Durchfahrt vergleichbar sind.

Es versteht sich, dass die im Rahmen dieses Dokumentes beschriebenen Verfahren für mehrere Wagen der Anzahl von Wagen und insbesondere für alle Wagen der Anzahl von Wagen durchgeführt werden kann, wobei die derart ermittelten Daten für jeden Wagen einzeln zu betrachten sind.

"Ein" oder "eine" sind im Rahmen der vorliegenden Beschreibung als unbestimmte Artikel und nicht als Zahlwort zu verstehen, sofern nicht explizit auf eine andere Bedeutung, beispielsweise durch die Verwendung von "genau ein" oder "genau eine" hingewiesen wird.

Das Verfahren kann weiterhin umfassen, die Vorbeifahrt eines Referenzwagens der Anzahl von gekoppelten Wagen an dem Messpunkt zu detektieren und unter Bezugnahme auf die detektierte Vorbeifahrt des Referenzwagens eine Ordnungsnummer jedes Wagens, bei dem wenigstens eine optische Aufnahme wenigstens eines Bereiches des Wagens generiert wurde, innerhalb des Zuges zu bestimmen um dergestalt die optische Aufnahme eindeutig einem Wagen zuzuordnen. Derart wird eine oder mehrere optische Aufnahmen eindeutig und identifizierbar dem Wagen zugeordnet, an dem eben diese wenigstens eine optische Aufnahme generiert wurde. Insbesondere kann vorgesehen sein, dass ein Referenzwagen derart ausgeführt ist, dass er durch wenigstens eine optische Aufnahme, deutlich von den anderen Wagen unterscheidbar ist. So kann ein Wagen beispielsweise durch eine farbige Markierung oder Anbauten von den anderen Wagen unterscheidbar sein.

In bestimmten Ausführungsformen des Verfahrens ist vorgesehen, dass das wenigstens eine charakteristische Geometriemerkmal wenigstens eine Landmarke des Kipphebels eines Wagens umfasst. Eine Landmarke ist dabei beispielsweise eine in der optischen Aufnahme klar und eindeutig identifizierbare Struktur, wie beispielsweise eine Ecke oder eine Kante eines Körpers, vorliegend also des Kipphebels. Die Landmarke des Kipphebels kann insbesondere in unmittelbarer Nähe zu dem oben beschriebenen Anlaufpunkt gewählt sein. Eine Landmarke des Kipphebels kann beispielsweise auch an einer Kipphebelrolle des Kipphebels gesetzt sein. Die genannten Ausführungsformen des Verfahrens umfassen weiterhin, ein weiteres charakteristisches Geometriemerkmal des Wagens zu identifizieren und den Abstand zwischen der Landmarke des Kipphebels und dem weiteren charakteristischen Geometriemerkmal zu bestimmen, wobei das weitere charakteristische Geometriemerkmal eine Lage relativ zur Mitte des Wagens quer zur Fahrtrichtung des Wagens kennzeichnet, eine Landmarke eines zweiten Kipphebels des Wagens ist, oder eine Kombination daraus. Das weitere charakteristische Geometriemerkmal kann ein reales, also tatsächlich am Wagen vorhandenes, Geometriemerkmal sein, oder ein virtuelles Geometriemerkmal, das in Relation zu einem oder mehreren realen Geometriemerkmalen gebildet wird. Wenn der Kipphebel derart verbogen ist, dass der Abstand von der Wagenmitte oder von einem zweiten Kipphebel zu gross, resp. zu klein wird, besteht die Gefahr dass der Kipphebel mit ortsfesten Komponenten der Sortieranlage kollidiert und so die gesamte Sortieranlage beschädigt und/oder zum Stillstand bringt.

In weiteren Ausgestaltungen des Verfahrens umfasst das wenigstens eine Geometriemerkmal wenigstens eine Landmarke eines Verbindungsstücks, mittels dessen der Wagen bei dem die optische Aufnahme des wenigstens eines Bereichs des Wagens generiert wurde, mit einem anderen Wagen gekoppelt ist.

Es kann vorgesehen sein, dass das Fahrgestell des Wagens wenigstens einen Balken, insbesondere einen in Fahrtrichtung des Wagens verlaufenden Längsbalken und/oder einen quer zur Fahrtrichtung des Wagens Querbalken, aufweist, und das wenigstens eine charakteristische Geometriemerkmal wenigstens eines von:
- wenigstens eine Kante, und/oder
- wenigstens zwei Referenzpunkte, und/oder
- wenigstens charakteristisches Flächenelement
wenigstens eines Balkens der genannten wenigstens einen Balken umfasst. Das wenigstens eine charakteristische Geometriemerkmal ist derart gewählt, dass es geeignet ist, eine Verbiegung und/oder eine Torsion des wenigstens einen Balkens zu erkennen. Beispiele für solche Geometriemerkmale erschliessen sich dem Fachmann von selbst. Wenn sich beispielsweise der Abstand zweier Kanten entlang der Längserstreckung des Balkens verändert, kann dies auf eine Torsion des Balkens hinweisen. Ebenso könnten Verbiegungen oder Abnutzungen durch die Auswertung der Kanten oder von charakteristischen Punkten auf dem Balken erkannt werden. Dies sind nur Beispiele, und dem Fachmann werden sich abhängig von der Form und Oberflächenstruktur des Balkens ohne Weiteres auch andere für den konkreten Anwendungsfall geeignete Geometriemerkmale offenbaren.

In speziellen Ausgestaltungen, wobei ein Wagen zwei Balken aufweist, wird eine Bezugslinie auf einem ersten der beiden Balken bestimmt, welche zu dem ersten Balken ortsfest ist, und es wird der räumliche Versatz wenigstens eines Referenzpunktes auf dem zweiten Balken relativ zu der Bezugslinie in der Richtung einer Achse und/oder Orientierung im Raum bestimmt. Die beiden Balken können ein Längsbalken und ein Querbalken des Fahrgestells des Wagens sein, der Räder des Wagens trägt. Die Bezugslinie kann eine reale Linie sein, beispielsweise eine Kante des ersten Balkens, oder eine virtuelle Linie, die beispielsweise zwischen zwei fixen Bezugspunkten des ersten Balkens gebildet wird. Wenn beispielsweise eine Bezugslinie auf dem Längsbalken bestimmt wird, kann ein Versatz des Abstandes wenigstens eines Referenzpunktes auf dem Querbalken relativ zu der Bezugslinie bzw. dessen Veränderung über die Zeit und/oder die Anzahl an Vorbeifahrten am Messpunkt einen Hinweis auf eine Durchbiegung des Querbalkens aufgrund der aufgeladenen Lasten oder Abnutzung der Rollen geben.

Ebenso kann vorgesehen sein, dass als ein charakteristisches Geometriemerkmal, alternativ oder ergänzend zu den oben spezifizierten charakteristischen Geometriemerkmalen, ein Durchmesser eines oder mehrerer Räder oder Rollen eines Wagens ermittelt wird. Dies kann erfolgen, indem beispielsweise mehrere Punkte am Umfang eines Rades oder einer Rolle identifiziert werden. Im einfachsten Fall könnten dabei zwei sich am Umfang einer Rolle oder eines Rades gegenüberliegende Punkte herangezogen werden. Es können selbstverständlich auch mehr Punkte am Umfang identifiziert und zur Auswertung herangezogen werden. Ebenso kann auf diese Weise auch die Rundheit bzw. Unrundheit oder Formabweichung der Rolle oder des Rades bestimmt werden. die Rolle oder das Rad kann dergestalt auf unzulässig starken Verschleiss, beispielsweise durch Unterschreiten eines auf geeignete Weise festgelegten Mindestdurchmessers oder Überschreiten einer maximal zulässigen Formabweichung, überwacht werden. Die genannte Bestimmung von Durchmessern und/oder Unrundheitswerten kann beispielsweise bei Kipphebelrollen oder Laufrädern des Wagens, aber auch anderen allenfalls am Wagen angeordneten Rädern und Rollen, durchgeführt werden.

Gemäss weiterer Aspekte der vorliegend offenbarten Gegenstände wird das vorgeschlagene Verfahren zur Geometriebestimmung verwendet um ein Verfahren zur Schadenerkennung und/oder -vorhersage an den Wagen einer Sortieranlage durchzuführen.

Hierbei wird gemäss einer ersten Ausgestaltung ein Verfahren der oben beschriebenen Art verwendet, um an einem Wagen den Abstand zwischen einer Landmarke des Kipphebels und einer weiteren Landmarke zu bestimmen. Der Abstand zwischen der Landmarke des Kipphebels und der weiteren Landmarke und/oder ein Gradient des genannten Abstands über die Anzahl von Vorbeifahrten des Wagens an dem Messpunkt wird auf das Überschreiten eines oberen Schwellenwerts bzw. Unterschreiten eines unteren Schwellenwerts überwacht. Wie oben erwähnt, kann ein zu grosser, resp. zu kleiner Abstand des Kipphebels bzw. einer Landmarke des Kipphebels aufgrund von Verformungen Ursache für eine Beschädigung und/oder einen Stillstand der Sortieranlage sein. Ein Überschreiten eines oberen Schwellenwerts und/oder Unterschreiten eines unteren Schwellenwerts dieses Abstands muss daher als Zeichen gewertet werden, dass der Wagen die Ursache für eine Anlagenhavarie sein kann, derart, dass der Wagen nicht mehr innerhalb der Sortieranlage betriebssicher und/oder funktionssicher ist. Damit kann ein Überschreiten eines oberen Schwellenwerts oder ein Unterschreiten eines unteren Schwellenwerts des genannten Abstandes als Schaden gewertet werden, und die Überwachung dieses Abstandes dient der Schadenerkennung. Ebenso kann eine schnelle Veränderung des Abstandes bei aufeinanderfolgenden Vorbeifahrten an der Messstelle als Zeichen dafür gewertet werden, dass sich ein Schaden ankündigt, weshalb eine Überwachung des genannten Gradienten der Schadensvorhersage dient, im Sinne einer Extrapolation des derart bestimmten Abstands in die Zukunft. Selbstverständlich kann die Landmarke des Kipphebels auch an einer Kipphebelrolle des Kipphebels gesetzt sein, so, dass damit die Position des Kipphebelrads und/oder ein Gradient der Veränderung des Kipphebelrads bestimmt bzw. überwacht wird. Beispielsweise kann der mittels des oben beschriebenen Verfahrens bestimmte Gradient des Abstands zwischen der Landmarke des Kipphebels und der weiteren Landmarke über die Anzahl von Vorbeifahrten des Wagens an dem Messpunkt und ein aktueller Wert des Abstands in die Bestimmung oder Ermittlung bzw. Vorhersage einer verbleibenden Nutzungsdauer des Wagens einfliessen. Im Rahmen der vorliegenden Ausführungen ist eine so bestimmte verbleibende Nutzungsdauer insbesondere eine erwartete bzw. zu erwartende verbleibende Nutzungsdauer. Weiterhin wird die verbleibende Nutzungsdauer insbesondere aus gemessenen Daten rechnerisch bestimmt, weshalb auch von einer Berechnung der verbleibenden Nutzungsdauer gesprochen werden kann bzw. davon, die verbleibende Nutzungsdauer zu berechnen. Es versteht sich, dass dieses Verfahren für mehrere Wagen der Anzahl von Wagen und insbesondere für alle Wagen der Anzahl von Wagen durchgeführt werden kann, wobei die Werte für jeden Wagen einzeln zu betrachten sind. Der Begriff «Nutzungsdauer» bezeichnet nicht zwangsläufig eine Zeitspanne, sondern kann ebenso eine verbleibende Anzahl von Runden bezeichnen, die der Wagen noch auf der Führungsbahn zurücklegen kann, wie sich dem Fachmann in diesem Zusammenhang ohne Weiteres erschliesst.

Im Rahmen des vorliegend beschriebenen Verfahrens können Über-, bzw. Unterschreitungen von Schwellenwerten der durch die optischen Aufnahmen bestimmten Verformungen und/oder Unterschreitungen der verbleibenden Nutzungsdauer verwendet werden, um entsprechende Meldungen auszugeben, damit Wartungen und/oder Reparaturen geplant werden können.

In weiteren Ausgestaltungen des Verfahrens zur Schadenerkennung und/oder - vorhersage an den Wagen einer Sortieranlage wird ein Verfahren der oben beschriebenen Art zur Geometriebestimmung verwendet, um für wenigstens ein charakteristisches Geometriemerkmal die Position entlang wenigstens einer Achse und/oder die Orientierung in wenigstens einer Ebene relativ zu einem zweiten charakteristischen Geometriemerkmal oder in einem Koordinatensystem der optischen Aufnahme zu bestimmen. Die genannte Achse kann eine Achse im Raum oder eine Achse in der optischen Aufnahme sein. Ebenso kann die Orientierung, insbesondere einer linienförmigen Struktur, wie einer Kante oder einer realen oder virtuellen Bezugslinie, im Raum oder in der optischen Aufnahme bestimmt werden. Dabei wird die Orientierung in der Projektion auf wenigstens eine Ebene bestimmt, und zwar bezogen auf ein zweites charakteristisches Geometriemerkmal oder in einem Koordinatensystem der optischen Aufnahme. Die derart bestimmte Grösse wird mit einem Sollwert verglichen, um eine Soll-Ist-Abweichung zu bestimmen. Analog zum oben beschriebenen Vorgang wird diese Soll-Ist-Abweichung und/oder ein Gradient der Soll-Ist-Abweichung über die Anzahl der Vorbeifahrten des Wagens an dem Messpunkt auf das Überschreiten eines oberen Schwellenwerts und/oder das Unterschreiten eines unteren Schwellenwerts überwacht. Häufig ist der obere Schwellenwert ein positiver Schwellenwert der Soll-Ist-Abweichung und der untere Schwellenwert ein negativer Schwellenwert der Soll-Ist-Abweichung. Dabei kann der Betrag des unteren Schwellenwerts durchaus auch grösser als der obere Schwellenwert sein. Der vom oberen und unteren Schwellenwert definierte Bereich der Soll-Ist-Abweichung muss nicht, kann aber, symmetrisch um den Wert Null liegen. Auch in diesem Falle kann, analog zu oben beschriebenen Verfahren, eine verbleibende Nutzungsdauer des Wagens berechnet bzw. vorhergesagt oder bestimmt werden, wobei ein aktueller Wert der Soll-Ist-Abweichung sowie der Gradient der Soll-Ist-Abweichung über die Anzahl der Vorbeifahrten des Wagens an dem Messpunkt in die Berechnung bzw. Vorhersage der verbleibenden Nutzungsdauer des Wagens einfliessen.

Selbstverständlich kann das im vorhergehenden Absatz beschriebene Verfahren auch in Kombination mit den oben beschriebenen Verfahren verwendet werden, bei dem der Abstand zwischen einer Landmarke des Kipphebels und einer weiteren Landmarke und/oder der Gradient des Abstands zwischen der Landmarke des Kipphebels und der weiteren Landmarke über die Anzahl von Vorbeifahrten des Wagens an dem Messpunkt überwacht werden bzw. in die Berechnung und/oder Vorhersage einer verbleibenden Nutzungsdauer des Wagens einfliessen.

In weiteren Ausgestaltungen des Verfahrens umfasst die Position und/oder Orientierung wenigstens eines charakteristischen Geometriemerkmals den räumlichen Versatz wenigstens eines Referenzpunktes auf einem Balken des Fahrgestells des Wagens relativ zu einer Bezugslinie auf einem anderen Balken des Fahrgestells in Richtung einer Achse im Raum.

In weiteren Ausgestaltungen umfasst das wenigstens eine Geometriemerkmal wenigstens eine Landmarke eines Verbindungsstücks, mittels dem der Wagen, bei dem die optische Aufnahme des wenigstens eines Bereichs des Wagens generiert wurde, mit einem anderen Wagen gekoppelt ist

In weiteren Ausgestaltungen werden die gewonnenen Werte für die Lage und/oder Orientierung verschiedener Geometriemerkmalen, bzw. deren Soll-Ist-Abweichung, in Kombination betrachtet. Für wenigstens zwei charakteristische Geometriemerkmale wird die Position entlang wenigstens einer Achse und/oder die Orientierung in wenigstens einer Ebene relativ zu einem zweiten charakteristischen Geometriemerkmal oder in einem Koordinatensystem der optischen Aufnahme bestimmt und diese jeweils mit einem Sollwert verglichen, um eine jeweilige Soll-Ist-Abweichung zu bestimmen. Die jeweiligen Soll-Ist-Abweichungen der wenigstens zwei charakteristischen Geometriemerkmale werden miteinander verrechnet, um einen Schädigungsparameter zu bilden. In dieser Hinsicht wird der Fachmann, ausgehend von der Geometrie des Wagens und/oder vergangenen Erfahrungen, die Soll-Ist-Abweichungen entsprechend gewichten. Eine solche Gewichtung kann auch durch einen oder mehrere selbstlernende Algorithmen dynamisch angepasst werden. Wenigstens der Schädigungsparameter und/oder ein Gradient des Schädigungsparameters über die Anzahl von Vorbeifahrten des Wagens an dem Messpunkt wird auf die Überschreitung eines Schwellenwerts überwacht. Die Überschreitung von Schwellenwerten des Schädigungsparameters kann verwendet werden, um entsprechende Meldungen auszugeben, damit Wartungen und/oder Reparaturen geplant werden können.

Ein Gradient des Schädigungsparameters über die Anzahl von Vorbeifahrten des Wagens an dem Messpunkt sowie ein aktueller Wert des Schädigungsparameters können gemäss weiterer Ausgestaltungen des Verfahrens in die Ermittlung oder Berechnung einer verbleibenden Nutzungsdauer des Wagens einfliessen. Zusätzlich kann auch ein Gradient des Abstands zwischen einer Landmarke des Kipphebels und einer weiteren Landmarke über die Anzahl von Vorbeifahrten des Wagens an dem Messpunkt und ein aktueller Wert dieses Abstands in die Berechnung einer verbleibenden Nutzungsdauer des Wagens einfliessen. Wie oben ausgeführt, können die so bestimmten Anzeichen für eine aktuelle oder sich anbahnende Schädigung des Wagens gewichtet werden, wobei die Gewichtung mittels eines oder mehrerer selbstlernender Algorithmen dynamisch ausgestaltet sein kann.

Die Sollwerte, die für die Soll-Ist-Vergleiche herangezogen werden, werden für jeweils einen Wagen insbesondere während mehrerer Runden, die der Zug auf der Führungsbahn zurücklegt, aus der Position und/oder Orientierung wenigstens eines charakteristischen Geometriemerkmals bestimmt, das aus den gewonnenen optischen Aufnahmen während mehrerer Vorbeifahrten des Wagens an dem Messpunkt gewonnen wird. Ebenso kann, ergänzend oder alternativ zu dem wenigstens einen Sollwert, wenigstens ein Schwellenwert, insbesondere wenigstens ein oberer Schwellenwert und/oder wenigstens ein unterer Schwellenwert eines Abstands und/oder wenigstens ein positiver oberer Schwellenwert und/oder wenigstens ein negativer unterer Schwellenwert einer Soll-Ist-Abweichung oder des Gradienten der Soll-Ist-Abweichung über die Anzahl der Vorbeifahrten des Wagens an dem Messpunkt, deren Unterschreiten oder Überschreiten überwacht wird, während mehrerer Runden, die der Zug auf der Führungsbahn zurücklegt, bestimmt werden. Insbesondere wird nach einem Austausch oder einer Reparatur und/oder Wartung eines Wagens der wenigstens eine Sollwert für einen Wagen während mehrerer Vorbeifahrten des Wagens an der Aufnahmevorrichtung neu bestimmt.

Weiterhin ist eine Vorrichtung zur Durchführung wenigstens eines Verfahrens der oben angegebenen Art beschrieben. Die Vorrichtung umfasst wenigstens ein Mittel zur Generierung einer optischen Aufnahme und eine Auswerteeinheit. Das wenigstens eine Mittel zur Generierung einer optischen Aufnahme und die Auswerteeinheit sind zur Übertragung von optischen Aufnahmen von dem wenigstens einen Mittel zur optischen Aufnahme zur Auswerteeinheit koppelbar. Diese Kopplung kann kabelgebunden vorgesehen sein, wobei das wenigstens eine Mittel zur Generierung einer optischen Aufnahme und die Auswerteeinheit mit den entsprechenden Verbindungsmöglichkeiten, wie zum Beispiel Steckterminals, ausgestattet sind. Ebenso kann die Kopplung kabellos mittels jeglicher heute oder in Zukunft bekannter kabellosen Kommunikationstechnik vorgesehen sein kann. In diesem Falle sind das wenigstens eine Mittel zur Generierung einer optischen Aufnahme und die Auswerteeinheit mit den entsprechenden Kommunikationsmodulen für die kabellose Kommunikation bzw. Datenübertragung ausgestattet. Die Auswerteeinheit ist zur Verarbeitung der wenigstens einen optischen Aufnahme gemäss einem der vorstehenden Ansprüche konfiguriert, also insbesondere zur Identifikation von wenigstens einem charakteristischen Geometriemerkmal sowie der Bestimmung der Position des wenigstens einen charakteristischen Geometriemerkmals entlang wenigstens einer Raumrichtung in einem Koordinatensystem der optischen Aufnahme und/oder relativ zu einem zweiten charakteristischen Geometriemerkmal in wenigstens einer Ebene und/oder zur Bestimmung der Orientierung des wenigstens einen charakteristischen Geometriemerkmals relativ zu einem zweiten charakteristischen Geometriemerkmal und/oder in einem Koordinatensystem der optischen Aufnahme in wenigstens einer Ebene. Selbstverständlich kann die Vorrichtung zur weiteren Verarbeitung der wenigstens einen optischen Aufnahme gemäss wenigstens einem der oben angegebenen weiterführenden Verfahren vorgesehen und konfiguriert sein. Die Auswerteeinheit kann beispielsweise konfiguriert werden, indem wenigstens ein Programmcode in wenigstens einem Prozessor der Auswerteeinheit ausgeführt wird.

Die Vorrichtung kann beispielsweise fest an der Sortieranlage verbaut sein. In anderen Ausgestaltungen kann die Vorrichtung transportabel gebaut sein, derart, dass sie zwischen verschiedenen Sortieranlagen transportiert und dort zur Durchführung eines Verfahrens der oben genannten Art temporär installiert werden kann.

Die oben genannten spezifischen Ausführungsformen können untereinander kombiniert werden. Weitere, nicht spezifisch offenbarte Ausführungsformen der Lehre dieses Dokumentes erschliessen sich dem Fachmann ohne Weiteres.

### KURZE BESCHREIBUNG DER FIGUREN

Die hier dargelegten Sachverhalte werden nachfolgend anhand ausgewählter in der Zeichnung dargestellter Ausführungsbeispiele näher erläutert. Im Einzelnen zeigen
- Fig. 1: eine schematische Darstellung einer beispielhaften Sortieranlage, die zur Durchführung des vorgeschlagenen Verfahrens geeignet ist;
- Fig. 2: einen Bereich eines beispielhaften Wagens auf einer Führungsbahn;
- Fig. 3: eine Ansicht eines Wagens mit Blick in Fahrtrichtung mit einem ersten Beispiel eines Abstands zweier charakteristischer Geometriemerkmale;
- Fig. 4: eine schematische Ansicht eines Querbalkens und eines Längsbalkens mit einem daran angeordneten Verbindungsstück;
- Fig. 5: eine Ansicht eines Wagens mit Blick in Fahrtrichtung mit einem zweiten Beispiel eines Abstands zweier charakteristischer Geometriemerkmale; und
- Fig. 6: ein Beispiel für die Bestimmung von Winkeln.

Die Zeichnungen sind stark schematisiert. Nicht für das Verständnis der beschriebenen Gegenstände notwendige Einzelheiten sind weggelassen worden. Weiterhin zeigen die Zeichnungen nur ausgewählte Ausführungsbeispiele und dürfen nicht zur Einschränkung der in den Ansprüchen umschriebenen Gegenstände herangezogen werden. Nicht gezeigte Ausführungsformen können durchaus von den Ansprüchen abgedeckt sein.

### AUSFÜHRUNGSBEISPIELE

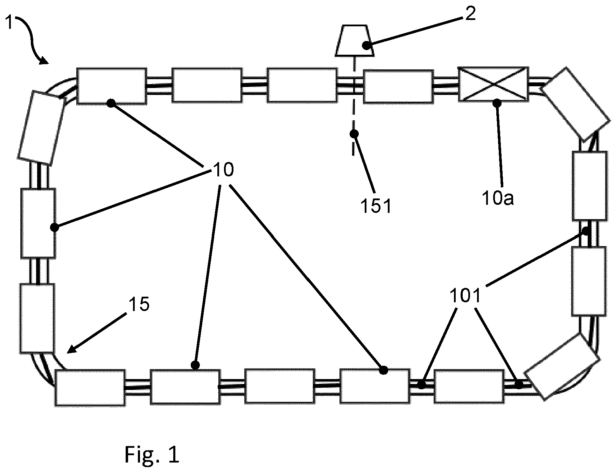

Figur 1 zeigt eine schematische Darstellung einer beispielhaften Sortieranlage 1, die zur Durchführung des vorgeschlagenen Verfahrens geeignet ist. Auf einer umlaufenden Führungsbahn 15 sind Wagen 10, 10a entlang der Führungsbahn beweglich angeordnet. Jeder Wagen umfasst einen Gelenkkopf 101 als Verbindungsstück zu einem anderen Wagen. Jeder Wagen 10, 10a ist mit beiden benachbarten Wagen gekoppelt, so, dass ein Endloszug auf der Führungsbahn 15 angeordnet ist. Es ist vorgesehen, dass sich der Endloszug entlang der Führungsbahn 15 umlaufend bewegt. Ortsfest zur Führungsbahn ist wenigstens eine Aufnahmevorrichtung 2 zur Generierung von optischen Aufnahmen angeordnet. Dabei ist ein Messpunkt 151 auf der Führungsbahn definiert. Während der Vorbeifahrt eines Wagens an der Aufnahmevorrichtung 2 oder dem Messpunkt 151 wird wenigstens eine optische Aufnahme wenigstens eines Bereichs des Wagens erstellt. Der Wagen, dem eine optische Aufnahme zuzuordnen ist, muss identifiziert werden. Dazu könnte beispielsweise jeder Wagen mit einem Identifikationsmerkmal ausgestattet sein, das in einer optischen Aufnahme identifizierbar ist. Ebenso könnte vorgesehen werden, dass jeder Wagen oder wenigstens ein Wagen mit einer RFID-Kennung versehen ist, die ortsfest an der Führungsbahn 15 ausgelesen ist und mit deren Hilfe identifiziert wird, welcher Wagen gerade am Messpunkt vorbeifährt, das heisst, an welchem Wagen gerade wenigstens eine optische Aufnahme generiert wird. Im gezeigten Ausführungsbeispiel ist ein Referenzwagen 10a durch einen geeigneten Identifikationsmarker in einer optischen Aufnahme von den anderen Wagen unterscheidbar. Damit kann der Referenzwagen 10a einmal pro Umlauf des Endloszuges identifiziert werden und die nachfolgenden Wagen werden durch Zählen der nachfolgenden Vorbeifahrt von Wagen identifiziert.

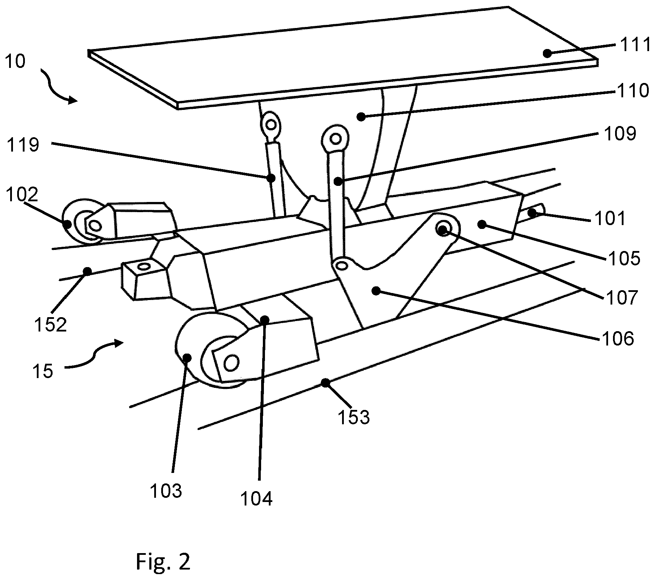

Ein Bereich eines beispielhaften Wagens 10 auf einer Führungsbahn 15 ist in der Figur 2 dargestellt. Der Wagen 10 läuft mittels zweier Laufrollen 102 und 103 auf Laufschienen 152 und 153. Die Laufrollen 102 und 103 sind an einem Querbalken 104 des Fahrgestells des Wagens 10 gelagert. Mit dem Querbalken verbunden und auf dem Querbalken gelagert ist ein Längsbalken 105 angeordnet. Der Längsbalken trägt ein Verbindungsstück 101, das zur gelenkigen Kopplung mit einem benachbarten Wagen vorgesehen ist. Der Querbalken mit den Laufrollen ist in der vorgesehenen Fahrtrichtung hinten am Wagen angeordnet. An einer Lagerstelle 107 ist ein Kipphebel 106 drehbar am Längsbalken 105 angelenkt. Der Kipphebel umfasst einen im weiteren Sinne V-förmig ausgestalteten Kipphebelarm, mit zwei Schenkeln, die sich an einem Scheitel treffen. Der Kipphebel weist im Bereich des Scheitels einen Anlaufpunkt auf, der für eine Betätigung des Kipphebels vorgesehen ist. Wie unten ausgeführt, ist der Anlaufpunkt vorliegend als Kipphebelrolle ausgeführt, das im Bereich des Scheitels am Kipphebelarm gelagert ist. Der Scheitel des Kipphebelarms ist nach unten und in Fahrtrichtung nach hinten gerichtet angeordnet. Die Lagerstelle 107, um die der Kipphebelarm am Längsbalken bzw. am Fahrwerk drehbar gelagert ist, ist an einem Ende des Kipphebelarms angeordnet. Demnach kann das andere Ende des Kipphebelarms bewegt werden, indem eine Bewegung am Anlaufpunkt initiiert wird. Das andere Ende des Kipphebelarms ist über die Stössel 109 und 119 sowie den Kipp-/Rastmechanismus 110 funktionell zum Kippen der Kippschale 111 mit der Kippschale gekoppelt. Der Kipp-/Rastmechanismus 110 ist vorgesehen, um die Kippschale sicher in ihrer neutralen Position, d.h. in der Position, in der Ware sicher auf der Kippschale verbleibt, gehalten wird, solange keine Betätigung des Kipphebels erfolgt.

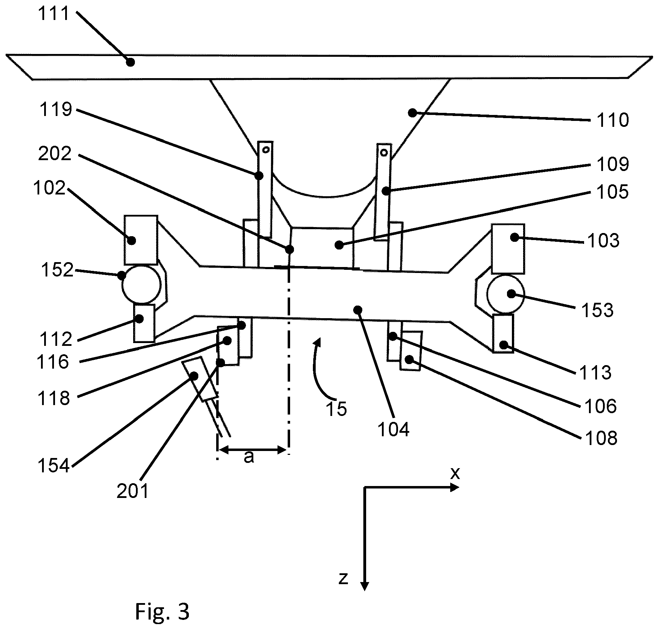

Figur 3 zeigt eine Ansicht eines Wagens mit Blick in Fahrtrichtung, das heisst, von seiner Hinterseite in Fahrtrichtung. Die Laufrollen 102 und 103 laufen, wie bereits in Figur 2 gezeigt, auf den Laufschienen 152 und 153. Dabei sind am Querbalken 104 weiterhin die Führungsrollen 112 und 113 gelagert, welche unter den Führungsschienen 152 und 153 laufen und dergestalt ein Abheben des Wagens verhindern. Der Wagen umfasst in diesem Beispiel zwei Kipphebel 106 und 116 mit Kipphebelrollen 108 und 118, die in Fahrtrichtung symmetrisch auf beiden Seiten des Wagens angeordnet sind, so, dass die Kippschale 111 prinzipiell in beide Richtungen abgekippt werden kann. Ortsfest zur Führungsbahn 15, welche die Führungsschienen 152 und 153 umfasst, ist eine Betätigungskulisse 154 in Fahrtrichtung links zu erkennen. Diese ist zur Mitte der Führungsbahn hin beweglich und ist einerseits so positionierbar, dass die Kipphebelrolle 118 sich an der Betätigungskulisse 154 vorbeibewegt, andererseits aber auch so, dass die Kipphebelrolle während der Vorbeifahrt des Wagens auf die Betätigungskulisse aufläuft und so die Kippschale nach in Fahrtrichtung rechts abkippt. Diese Vorgänge laufen mit hoher Geschwindigkeit ab bei teilweise schwerer Beladung der Kippschale, was in einer starken mechanischen Belastung des gesamten Kippmechanismus resultiert. Dabei besteht die Gefahr, dass, wenn die Kipphebel zu stark nach aussen verformt werden, diese mit ortsfesten Komponenten des Kippschalensortierers kollidieren und somit eine Havarie des gesamten Kippschalensortierers verursachen. Daher wird in einer optischen Aufnahme als ein charakteristisches Geometriemerkmal eine Landmarke 201 des Kipphebels identifiziert. Die Landmarke des Kipphebels ist im gezeigten Ausführungsbeispiel ein am weitesten seitlich liegender Punkt des Kipphebelrads 118. Es wird weiterhin als zweites charakteristischen Geometriemerkmal eine weitere Landmarke 202 identifiziert, die eine feste Lage relativ zur Mitte des Wagens hat. Dies ist im Ausführungsbeispiel eine seitliche Kante des Längsbalkens 105. In anderen Ausführungsbeispiel könnte dies auch eine virtuelle Landmarke sein, beispielsweise die Mitte des Längsbalkens, die aus der Lage der beiden seitlichen Kanten des Längsbalkens gebildet wird. Dabei kann eine solche virtuelle Landmarke auch als geeignet gewichtete Mittelung über mehrere Vorbeifahrten am Messpunkt gebildet werden. Bei der Auswertung der optischen Aufnahme wird ein virtuelles Koordinatensystem in die optische Aufnahme gelegt. Im Ausführungsbeispiel orientiert sich das Koordinatensystem an der Führungsbahn 15, wobei die Koordinate x eine Querkoordinate bezeichnet, y eine Koordinate in Fahrtrichtung und z eine vertikale Koordinate. Im Ausführungsbeispiel wird die relative Position a der Landmarke 201 relativ zur Landmarke 202 entlang der Querkoordinate x ermittelt. Wenn der Wert a zu gross wird, deutet dies einen problematischen Zustand an, in dem keine längerfristige Betriebssicherheit mehr gewährleistet ist. Es kann zum Beispiel eine Meldung ausgegeben werden, die die Planung einer Wartung veranlasst. Ebenso kann ausgewertet werden, ob und wie schnell sich der Abstand a über die Anzahl der Vorbeifahrten an dem Messpunkt verändert. Eine schnelle Veränderung kann ebenfalls als Hinweis auf einen problematischen Zustand gewertet werden. Ebenso können der Absolutwert des Abstandes bzw. der Relativposition a und der Gradient des Wertes a über der Anzahl der Vorbeifahrten am Messpunkt auf geeignete Weise miteinander verrechnet werden, um einen Schädigungsparameter zu bilden bzw. eine verbleibende Nutzungsdauer des Wagens vorherzusagen.

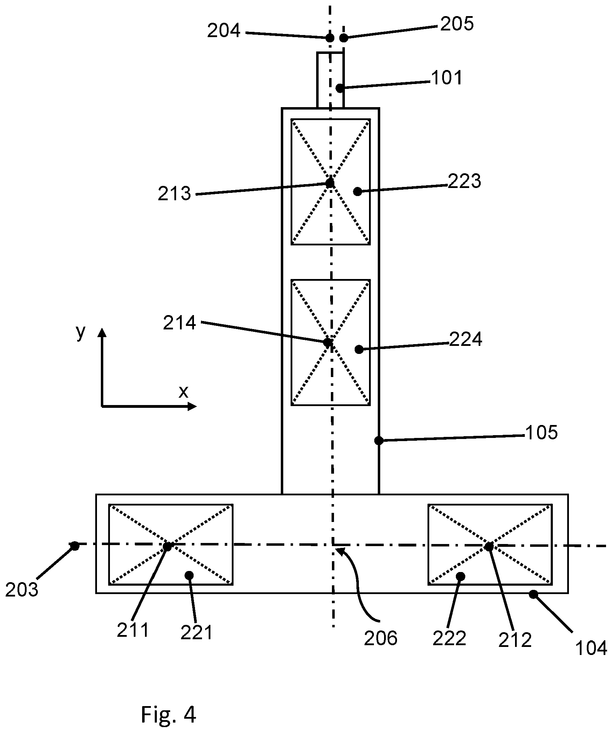

Figur 4 zeigt eine schematische Ansicht von Querbalken 104 und Längsbalken 105 mit dem daran angeordneten Verbindungsstück 101 in einer Ansicht von unterhalb der Führungsbahn. Auf dem Querbalken 104 und dem Längsbalken 105 sind Einprägungen 221 und 222 bzw. 223 und 224 angeordnet, die in der wenigstens einen optischen Aufnahme identifizierbare und lokalisierbare reale charakteristische Geometriemerkmale darstellen. Eine Kante des Verbindungsstücks 101 wird zur Bildung einer Geraden 205, welche parallel zu der Kante des Verbindungsstücks liegt, als weiteres charakteristisches Geometriemerkmals herangezogen. Aus den realen charakteristischen Geometriemerkmalen 221, 222, 223 und 224 werden weitere virtuelle charakteristische Geometriemerkmal gebildet, indem eine Gerade 203 durch die Flächenschwerpunkte 211 und 212 der Einprägungen 221 und 222 gelegt wird sowie eine Gerade 204 durch die Flächenschwerpunkte 213 und 214 der Einprägungen 223 und 224 gelegt wird. Es kann eine relative Orientierung der Längsachsen von Längsbalken 105 und Verbindungsstück 101 ermittelt werden als ein Winkel, den die Geraden 204 und 205, bzw. sich schneidende Parallelen dieser beiden Geraden, im dreidimensionalen Raum miteinander einschliessen. Der Sollwert dieses Winkels wäre beispielsweise 0. Ein Überschreiten der Abweichung des gebildeten Winkels vom Sollwert kann als Schaden gewertet werden. Ebenso kann, analog zum oben erwähnten Vorgehen, ein Gradient dieses Winkels über der Anzahl der Vorbeifahrten am Messpunkt ermittelt werden, also sozusagen die Geschwindigkeit, in der die Verbiegung grösser wird. Der so ermittelte Gradient bzw. dieser Gradient in geeigneter Kombination mit dem Absolutwert des Winkels kann zur Bestimmung eines Schädigungsparameters bzw. zur Vorhersage einer verbleibenden Nutzungsdauer herangezogen werden.

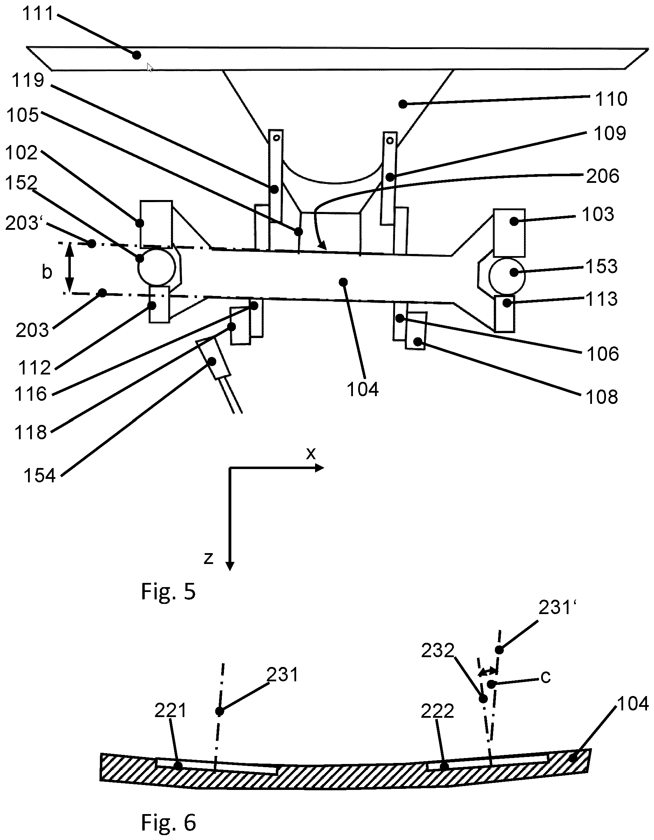

Weiterhin kann ein Punkt 206 ermittelt werden, an dem sich eine Parallele zur Geraden 203 mit der Geraden 204 schneidet. Unter Beizug von Figur 5 ist zu erkennen, dass in diesem Fall ein Wert b des Abstandes der Geraden 203 vom Punkt 206, wobei wohlgemerkt der Punkt 206 relativ zum Längsbalken 105 definiert ist, entlang bzw. in Richtung der vertikalen Koordinate z bzw. des Abstandes einer zur Geraden 203 parallelen Geraden 203' von der Geraden 203 ermittelt werden kann, wobei die Gerade 203 relativ zum Querbalken definiert ist. Dieser Wert kann mit einem Sollwert verglichen werden, der beispielsweise während mehrerer Vorbeifahrten eines neuen Wagens am Messpunkt ermittelt wird. Eine Veränderung des Ist-Werts kann, wie leicht zu erkennen, als Mass für eine Durchbiegung des Querbalkens 104 gewertet werden. Es versteht sich von selbst, dass auch in diesem Falle ein Absolutwert einer Soll-Ist-Abweichung, deren Gradient über die Anzahl der Vorbeifahrten am Messpunkt, oder eine geeignete Kombination von beiden ausgewertet werden kann, um Schäden zu erkennen und/oder Schäden vorherzusagen.

Unter Verweis auf Figur 4 sei angemerkt, dass die Orientierung charakteristischer Geometriemerkmale, die in Linien- bzw. Geradenform vorliegen, wie beispielsweise die Geraden 203, 204 und 205, nicht zwangsläufig als Winkel relativ zueinander bestimmt werden muss, sondern auch als ein Winkel bestimmt werden kann, den dieses charakteristische Geometriemerkmal mit einer oder mehrerer der Koordinatenachsen einschliesst. Grundsätzlich kann der Winkel im dreidimensionalen Raum bestimmt werden, fallweise aber auch der Winkel in der Projektion auf eine Ebene. Ebenso kann die Position eines charakteristischen Geometriemerkmals relativ zu einem anderen Geometriemerkmal bestimmt werden, aber auch als Absolutwert im Koordinatensystem. Grundsätzlich kann die absolute oder relative Position entlang einer Koordinatenachse, als Abstand vom Koordinatenursprung oder einem anderen charakteristischen Geometriemerkmal im dreidimensionalen Raum oder in einer Projektion auf eine Ebene bestimmt werden.

Eine weitere Möglichkeit, die Verbiegung und/oder Torsion eines Elements festzustellen bzw. zu bewerten ist die Bestimmung des Winkels zwischen zwei Flächenelementen. Dies ist in der Figur 6 am Beispiel des Querbalkens 104 illustriert. Es werden Flächennormalen 231 und 232 zu den Flächen der Einprägungen 221 und 222 gebildet. Insbesondere können die Flächennormalen an den Flächenschwerpunkten der Einprägungen gebildet sein. Ein Winkel c, der beispielsweise zwischen der Flächennormalen 232 der Einprägung 222 und einer diese Normale schneidenden Parallelen 231' zur Flächennormalen 231 der Einprägung 221 gebildet ist, stellt ein Mass für die Verbiegung und/oder Torsion des Querbalkens 104 dar. Analog zum oben Gesagten kann auch hier ein Sollwert vorgegeben oder während mehrerer Vorbeifahrten am Messpunkt bestimmt werden. Ein Absolutwert des Winkels c, ein Absolutwert einer Soll-Ist-Abweichung des Winkels c oder ein Gradient des Winkels c oder der Soll-Ist-Abweichung des Winkels c über die Anzahl der Vorbeifahrten am Messpunkt, oder eine geeignet gewichtete Kombination von zwei oder mehr der genannten Werte, kann ausgewertet und insbesondere zur Berechnung eines Schädigungsparameters bzw. zur Vorhersage einer verbleibenden Nutzungsdauer herangezogen werden.

Selbstverständlich können alle an einem Wagen bestimmten Messwerte, die einen Hinweis auf Schädigungen geben, als Absolutwerte und/oder Gradienten über der Anzahl der Vorbeifahrten am Messpunkt geeignet gewichtet und zur Berechnung eines Schädigungsparameters und/oder zur Vorhersage einer verbleibenden Nutzungsdauer des gesamten Wagens herangezogen werden.

Ein Über-, bzw. Unterschreiten eines Grenzwertes jeglichen oben beschriebenen Schädigungsparameters und/oder Unterschreitung eines Grenzwertes jeglicher oben beschriebener verbleibender Nutzungsdauer kann verwendet werden um eine Meldung auszugeben, welche zur Planung von Wartungen dienen kann.

Obschon der Gegenstand der vorliegenden Beschreibung anhand ausgewählter Ausführungsbeispiele erläutert wurde, sollen diese nicht einer Einschränkung der beanspruchten Erfindung dienen. Die Ansprüche umfassen Ausführungsformen, die nicht explizit dargestellt sind, und Ausführungsformen, die von den gezeigten Beispielen abweichen, sind dennoch von den Ansprüchen gedeckt.

## Patentansprüche

1. Verfahren zur Bestimmung der Geometrie von Wagen (10, 10a) einer Sortieranlage (1), wobei die Sortieranlage eine umlaufende Führungsbahn (15) und eine Anzahl Wagen (10, 10a) umfasst,
wobei jeder Wagen ein Fahrwerk umfasst, mit dem er in der Führungsbahn geführt ist und die Wagen miteinander gekoppelt sind, derart, dass sie einen Zug bilden, wobei jeder Wagen weiterhin eine Kippschale (111) sowie einen Kipphebel (106, 116) umfasst, wobei der Kipphebel um eine Lagerstelle (107) drehbar und relativ zum Fahrwerk ortsfest gelagert ist sowie beabstandet von der Lagerstelle mit der Kippschale funktionell zum Kippen der Kippschale gekoppelt ist, derart, dass eine Drehbewegung des Kipphebels um die Lagerstelle in einer Kippbewegung der Kippschale resultiert, wobei die gekoppelten Wagen entlang der Führungsbahn umlaufend bewegt werden,
wobei das Verfahren umfasst, an einem zur Führungsbahn feststehenden Messpunkt (151) wenigstens eine optische Aufnahme wenigstens eines Bereichs eines Wagens (10, 10a) zu generieren, den Wagen innerhalb des Zuges zu identifizieren, in der wenigstens einen optischen Aufnahme des wenigstens eines Bereichs des Wagens wenigstens ein charakteristisches Geometriemerkmal (201, 202, 203, 204, 205, 206, 221, 222, 223, 224, 231, 232) des Wagens zu identifizieren und dessen Position (a, b) entlang wenigstens einer Raumrichtung (x, y, z) in einem Koordinatensystem der optischen Aufnahme und/oder relativ zu einem zweiten charakteristischen Geometriemerkmal in wenigstens einer Ebene zu bestimmen und/oder die Orientierung (c) des wenigstens einen charakteristisches Geometriemerkmals relativ zu einem zweiten charakteristischen Geometriemerkmal und/oder in einem Koordinatensystem der optischen Aufnahme in wenigstens einer Ebene.

2. Verfahren gemäss dem vorstehenden Anspruch, welches umfasst, die Vorbeifahrt eines Referenzwagens (10a) der Anzahl von Wagen (10) an dem Messpunkt (151) zu detektieren und unter Bezugnahme auf die detektierte Vorbeifahrt des Referenzwagens eine Ordnungsnummer jedes Wagens, bei dem wenigstens eine optische Aufnahme wenigstens eines Bereiches des Wagens generiert wurde, innerhalb des Zuges zu bestimmen, um eine dergestalt die optische Aufnahme eindeutig einem Wagen zuzuordnen.

3. Verfahren gemäss einem der vorstehenden Ansprüche, wobei das wenigstens eine charakteristisches Geometriemerkmal wenigstens eine Landmarke (201) eines Kipphebels (116) eines Wagens umfasst und wobei das Verfahren umfasst, ein weiteres charakteristisches Geometriemerkmal (202) des Wagens zu identifizieren und den Abstand (a) zwischen der Landmarke des Kipphebels und dem weiteren charakteristischen Geometriemerkmal zu bestimmen, wobei das weitere charakteristische Geometriemerkmal eine Lage relativ zur Mitte des Wagens quer zur Fahrtrichtung (x) des Wagens kennzeichnet, eine Landmarke eines zweiten Kipphebels (106) des Wagens ist, oder eine Kombination daraus.

4. Verfahren gemäss einem der vorstehenden Ansprüche, wobei das wenigstens eine Geometriemerkmal wenigstens eine Landmarke (205) eines Verbindungsstücks (101) umfasst, mittels dessen der Wagen (10) bei dem die optische Aufnahme des wenigstens eines Bereichs des Wagens generiert wurde, mit einem anderen Wagen gekoppelt ist.

5. Verfahren gemäss einem der vorstehenden Ansprüche, wobei das Fahrgestell des Wagens wenigstens einen Balken (104, 105) aufweist, und wobei das wenigstens eine charakteristische Geometriemerkmal wenigstens eines von:
- wenigstens eine Kante, und/oder
- wenigstens zwei Referenzpunkte, und/oder
- wenigstens ein charakteristisches Flächenelement (221, 222, 223, 224) wenigstens eines Balkens
umfasst, und wobei das wenigstens eine charakteristische Geometriemerkmal geeignet ist, eine Abnutzung der Räder und/oder Verbiegung und/oder eine Torsion des wenigstens einen Balkens zu erkennen.

6. Verfahren gemäss dem vorstehenden Anspruch, wobei das Fahrgestell wenigstens zwei Balken (204, 205) umfasst, wobei eine Bezugslinie (204) auf einem ersten (105) der beiden Balken bestimmt wird, welche zu dem ersten Balken ortsfest ist, und der räumliche Versatz (b) wenigstens eines Referenzpunktes auf dem zweiten Balken (104) relativ zu der Bezugslinie in der Richtung wenigstens einer Achse (z) im Raum bestimmt wird.

7. Verfahren zur Schadenerkennung und/oder -vorhersage an den Wagen einer Sortieranlage, wobei mittels des Verfahrens gemäss Anspruch 3 an einem Wagen der Abstand (a) zwischen einer Landmarke (201) des Kipphebels und einer weiteren Landmarke (202) bestimmt wird und das Verfahren weiterhin umfasst, den Abstand zwischen der Landmarke des Kipphebels und der weiteren Landmarke und/oder einen Gradienten des genannten Abstands über die Anzahl von Vorbeifahrten des Wagens an dem Messpunkt auf das Überschreiten eines oberen Schwellenwerts und/oder Unterschreiten eines unteren Schwellenwerts zu überwachen.

8. Verfahren gemäss dem vorstehenden Anspruch, umfassend, eine verbleibende Nutzungsdauer des Wagens zu bestimmen, wobei der Abstand zwischen einer Landmarke des Kipphebels und einer weiteren Landmarke und der Gradient des Abstands zwischen der Landmarke des Kipphebels und der weiteren Landmarke über die Anzahl von Vorbeifahrten des Wagens an dem Messpunkt in die Bestimmung der verbleibenden Nutzungsdauer des Wagens einfliesst.

9. Verfahren zur Schadenerkennung und/oder -vorhersage an den Wagen einer Sortieranlage, umfassend, mittels eines Verfahrens gemäss einem der Ansprüche 1 bis 6 für wenigstens ein charakteristisches Geometriemerkmal die Position entlang wenigstens einer Achse und/oder die Orientierung in wenigstens einer Ebene relativ zu einem zweiten charakteristischen Geometriemerkmal oder in einem Koordinatensystem der optischen Aufnahme zu bestimmen, die derart bestimmte Grösse mit einem Sollwert zu vergleichen um eine Soll-Ist-Abweichung zu bestimmen und die Soll-Ist-Abweichung und/oder einen Gradienten der Soll-Ist-Abweichung über die Anzahl der Vorbeifahrten des Wagens an dem Messpunkt auf das Überschreiten eines oberen Schwellenwerts und/oder Unterschreiten eines unteren Schwellenwerts zu überwachen.

10. Verfahren gemäss dem vorstehenden Anspruch, weiterhin umfassend die Merkmale des Anspruch 7 oder des Anspruchs 8.

11. Verfahren gemäss einem der beiden vorstehenden Anspruche in Verbindung mit Anspruch 6, wobei die Position und/oder Orientierung wenigstens eines charakteristischen Geometriemerkmals den räumlichen Versatz wenigstens eines Referenzpunktes auf dem zweiten Balken relativ zu der Bezugslinie in Richtung einer Achse im Raum umfasst.

12. Verfahren gemäss einem Ansprüche 9 bis 11, wobei das wenigstens eine Geometriemerkmal wenigstens eine Landmarke eines Verbindungsstücks umfasst, mittels dem der Wagen, bei dem die optische Aufnahme des wenigstens eines Bereichs des Wagens generiert wurde, mit einem anderen Wagen gekoppelt ist.

13. Verfahren gemäss einem der Ansprüche 9 bis 12, umfassend, für wenigstens zwei charakteristische Geometriemerkmale die Position entlang wenigstens einer Achse und/oder die Orientierung in wenigstens einer Ebene relativ zu einem zweiten charakteristischen Geometriemerkmal oder in einem Koordinatensystem der optischen Aufnahme zu bestimmen und diese jeweils mit einem Sollwert zu vergleichen um eine jeweilige Soll-Ist-Abweichung zu bestimmen, wobei die jeweiligen Soll-Ist-Abweichungen der wenigstens zwei charakteristischen Geometriemerkmale miteinander verrechnet werden, um einen Schädigungsparameter zu bilden, und wenigstens den Schädigungsparameter und/oder einen Gradienten des Schädigungsparameters über die Anzahl von Vorbeifahrten des Wagens an dem Messpunkt auf die Überschreitung eines Schwellenwerts zu überwachen.

14. Verfahren gemäss einem der Ansprüche 7 bis 13, wobei wenigstens ein oberer Schwellenwert und/oder unterer Schwellenwert und/oder Sollwert für einen Wagen während mehrerer Runden, die der Zug auf der Führungsbahn zurücklegt, aus der Position und/oder Orientierung wenigstens eines charakteristischen Geometriemerkmals bestimmt, das aus den gewonnenen optischen Aufnahmen während mehrerer Vorbeifahrten des Wagens an dem Messpunkt gewonnen wird.

15. Vorrichtung zur Durchführung eines Verfahrens gemäss einem der vorstehenden Ansprüche, wobei die Vorrichtung wenigstens ein Mittel zur Generierung einer optischen Aufnahme und eine Auswerteeinheit umfasst, wobei das wenigstens eine Mittel zur Generierung einer optischen Aufnahme und die Auswerteeinheit zur Übertragung von optischen Aufnahmen von dem wenigstens einen Mittel zur optischen Aufnahme zur Auswerteeinheit koppelbar sind und die Auswerteeinheit zur Verarbeitung der optischen Aufnahme gemäss einem der vorstehenden Ansprüche konfiguriert ist.
